# EUROPÄISCHE PATENTSCHRIFT

(11) **EP 1 892 088 B1**
(45) Veröffentlichungstag und Bekanntmachung des Hinweises auf die Patenterteilung: **14.11.2012**
(21) Anmeldenummer: 07120589.2
(22) Anmeldetag: 30.11.2006
(51) Int. Cl.: B32B 3/12, B32B 37/14, B32B 37/15

(54) **Verfahren zur Herstellung einer Leichtbauplatte**
Method for manufacturing a lightweight building board
Procédé pour la fabrication d'un panneau de construction léger

(30) Priorität: 30.11.2005 DE 102005057550
(43) Veröffentlichungstag der Anmeldung: 27.02.2008
(62) Teilanmeldung aus: 06125144.3
(73) Patentinhaber: Fritz Egger GmbH & Co. OG, 3105 Unterradlberg (AT)
(72) Erfinder:
(74) Vertreter: Cohausz & Florack

(56) Entgegenhaltungen:
- EP-A- 1 029 665
- EP-A2- 0 263 661
- WO-A-2004/085152
- WO-A-2006/037679
- WO-A1-2004/098884
- FR-A- 2 739 803
- US-A1- 2003 033 786
- US-B1- 6 277 231

## Beschreibung

Die vorliegende Erfindung betrifft ein Verfahren zur Herstellung einer Leichtbauplatte, insbesondere für Möbel, bei dem auf eine untere Deckplatte ein Wabenmaterial aufgelegt wird, bei dem auf das Wabenmaterial eine obere Deckplatte aufgelegt wird, und bei dem die Herstellung in einem kontinuierlichen Produktionsverfahren mit einer einzigen Produktionsbewegungsrichtung durchgeführt wird. Ein solches Verfahren ist beispielsweise aus der EP 0 263 661 A1 bekannt.

Es besteht bei Herstellern von Möbeln, insbesondere von Kastenmöbeln, ein großes Interesse daran, möglichst leichte Holzwerkstoffplatten für Wände, Bodenplatten und Tischplatten zu produzieren, um insbesondere Mitnahmemöbel deutlich im Gewicht zu reduzieren.

Zur Herstellung solcher Leichtbauplatten gibt es bereits unterschiedliche, meist aufwendige, Verfahren. Eine solche Leichtbauplatte besteht aus einer in Draufsicht rechteckigen unteren Schicht, meist einem Holzwerkstoff, z.B. einer mitteldichten Faserplatte (MDF-Platte) oder einer Spanplatte, insbesondere 3-8 mm stark. Darauf wird ein Rahmen aus Kanthölzern (längs und quer) oder entsprechend gesägte Spanplattenblöcke verleimt. In die Zwischenräume im Rahmen wird dann ein auseinandergezogenes Pappwabenmaterial verleimt. Die oberste Schicht (Deckel) besteht wiederum aus einer gleichartigen Holzwerkstoffplatte, vorzugsweise 2-8 mm stark, wie die untere Schicht.

Das einfachste Verfahren ist ein manuelles Beleimen der Kanthölzer, manuelles Legen der Kanthölzer, manuelles Einführen einer beleimten Wabe, manuelles Legen eines Deckels, um dann die so manuell fertiggestellte Wabenplatte in einer einfachen Haltepresse einige Stunden ruhen zu lassen, um den Leim aushärten zu lassen. Als Leim wird in diesen Fällen vorzugsweise ein Weißleim (PVAc) verwendet, der eine gewisse mehrstündige Aushärtezeit braucht.

Als weitere Verfahren sind automatisierte Verfahren bekannt, die die gleichen Schritte wie oben beschrieben, aber automatisiert, durchführen. Das heißt, auch hier werden auf die Unterschicht in mehreren Schritten Kanthölzer mit unterschiedlicher Ausrichtung (längs und quer) oder entsprechende Spanplattenblöcke aufgelegt, beleimt, dann die Wabe in verschiedene Bereiche automatisiert eingelegt, ein Deckel automatisch aufgelegt und die fertige Wabenplatte üblicherweise in Mehretagenpressen ausgehärtet.

Ein weiteres Verfahren, bei dem ein Schmelzkleber (Hotmelt) zur Anwendung kommt, wurde von der Firma Kuper (Rietberg) im Jahr 2004 vorgestellt. Bei diesem Verfahren handelt es sich um ein technisch sehr aufwendiges Verfahren, welches in verschiedenen Schritten mit Längs- und Querbewegungen des späteren Produktes einzelne Kanthölzer an allen vier Seiten der Platte sowie zum Teil auch in der Mitte als Abstützung auflegt und dann in die entstehenden Hohlräume mechanisch die Wabenplatte einlegt.

Diese genannten automatisierten Verfahren haben den Nachteil einer sehr aufwendigen, mechanischen Automatisierung, eines entsprechend hohen Investitionspreises und einer relativ geringen Produktionskapazität. Diese recht geringe Produktionskapazität, üblicherweise unter 4 Takten/min., resultiert aus dem komplizierten Verfahren und den insbesondere mehrfachen Wechseln der Vorschubrichtung (längs, quer) des späteren fertigen Produktes. Auch die Einlegung von Kanthölzern längs und quer erhöht die Komplexität des Verfahrens.

Es ist die Aufgabe der vorliegenden Erfindung, ein Verfahren anzugeben, mit dem eine Leichtbauplatte besonders schnell hergestellt werden kann.
Die zuvor hergeleitete und aufgezeigte Aufgabe wird gelöst durch ein Verfahren mit den Merkmalen des Anspruches 1.

Vorteilhafte Ausgestaltungen sind in den Unteransprüchen angegeben.

Erfindungsgemäß wird bei dem Verfahren auf die untere Deckplatte ein Wabenmaterial sowie darauf die obere Deckplatte aufgelegt, wobei die Herstellung in einem kontinuierlichen Produktionsverfahren mit einer einzigen Produktionsbewegungsrichtung durchgeführt wird. Wenn zwischen die fertigen Platten aus Wabenmaterial keine Querhölzer eingelegt werden, kann das Verfahren vorteilhaft in einer Produktionsrichtung ohne störende Quer- oder Haltebewegungen durchgeführt werden, was zu einer sehr hohen Produktionsleistung führt, beispielsweise von mehr als 8 Platten in der Minute. Die einzelnen Verfahrensschritte, wie insbesondere Auflegen und Verkleben der einzelnen Elemente, können auf einfache Weise hintereinander durchgeführt werden.

In einer weiteren Ausgestaltung des Verfahrens wird auf die untere Deckplatte mindestens eine Längsrahmenleiste und ein Wabenmaterial sowie darauf eine obere Deckplatte aufgelegt. Vorzugsweise wird dabei die mindestens eine Längsrahmenleiste mit ihrer Längserstreckung parallel zu der Produktionsbewegungsrichtung auf die untere Deckplatte aufgelegt. Die Reihenfolge, in der die mindestens eine Längsrahmenleiste und das Wabenmaterial auf die untere Deckplatte aufgelegt werden, ist so wählbar, wie es der Durchführung des Verfahrens bzw. der Anordnung der Vorrichtung zweckdienlich ist.

Weiterhin wird für dieses Verfahren bevorzugt ein schnell reagierender Schmelzkleber verwendet, so dass keine Wartezeiten für die Aushärtung des Klebstoffes notwendig sind. Die mit Klebstoff beschichteten Elemente werden wie gesagt auf einfache Weise mittels Kalandern zusammengefügt.

Die Deckplatten können auch in Form von gerollten Platten, also endlos in Rollen, bereitgestellt und der Produktionslinie zugeführt werden, wobei die Platten vorzugsweise entweder unmittelbar vor dem Zusammenfügen mit dem Wabenkern abgelängt werden oder erst nach dem Verpressen. Es ist also denkbar, mit dem erfindungsgemäßen Verfahren einen unendlichen Plattenstrang kontinuierlich herzustellen, von dem in einem weiteren Verfahrensschritt einzelne Leichtbauplatten durch Ablängen erzeugt werden.

Die Erfindung wird nachfolgend an Hand eines Ausführungsbeispiels mit Bezug auf die beigefügten Zeichnungen näher erläutert. Es zeigen:
- Figur 1: eine schematische Ansicht eines Ausführungsbeispiels der Vorrichtung zur Herstellung von Leichtbauplatten,
- Figur 2A bis 2C: mehrere Ansichten eines ersten Ausführungsbeispiels der Leichtbauplatte, und
- Figur 3A bis 3B: mehrere Ansichten eines zweiten Ausführungsbeispiels der Leichtbauplatte.

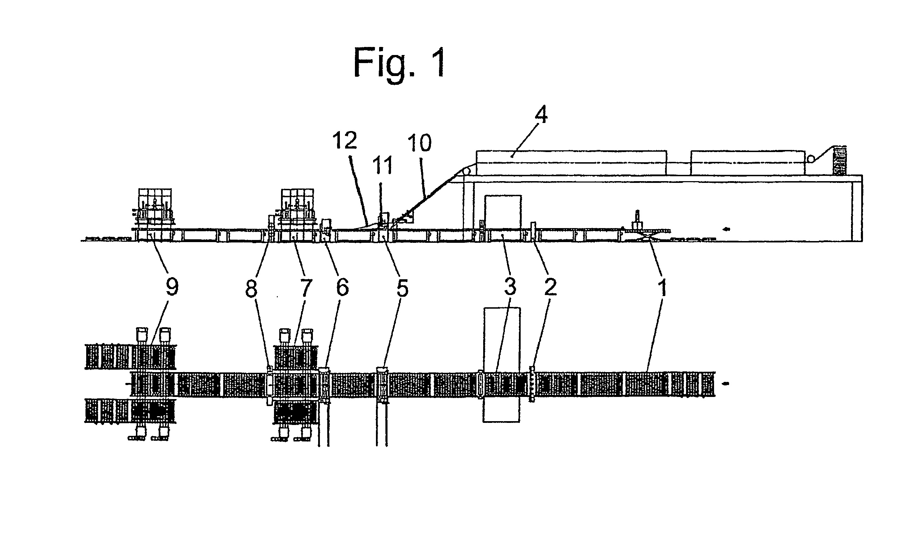

Bei dem erfindungsgemäßen Verfahren wird als untere Deckplatte eine dünne Holzwerkstoffplatte, vorzugsweise 2-8 mm starke MFD- oder Spanplatte, in Produktionsrichtung von einer Station 1 in eine Produktionsbewegungsrichtung gefördert, die in Figur 1 von rechts nach links verläuft. Im Ausführungsbeispiel der Fig. 1 weist die Station 1 einen Hubtisch auf, dem die dünnen Holzwerkstoffplatten als untere Deckplatten des Beispiels in Produktionsrichtung von einem Aufgabestapel zugeführt werden. Danach wird an einer Leimauftragsstation 2 über einen Düsenauftrag eine raupenförmige Leimbeschichtung auf diese aufgelegte, untere Deckplatte, bevorzugt mit Schmelzkleber, aufgetragen.

Alternativ ist es möglich, die untere Deckplatte auf einer Rolle, vorzugsweise einer Vorratsrolle, bereitzustellen. In diesem Fall ist eine entsprechende Rolle in der Station 1 angeordnet. Von dieser Rolle kann die untere Deckplatte zugeführt werden. Vorzugsweise wird die untere Deckplatte bei der Zuführung mittels einer ersten Ablängungsvorrichtung in einer geeigneten Länge abgelängt. Es ist jedoch auch möglich, die untere Deckplatte dem Produktionsverfahren kontinuierlich zuzuführen. In diesem Fall kann die Leichtbauplatte oder die untere Deckplatte zu einem späteren Zeitpunkt im Produktionsverfahren abgelängt werden. Die Ablängung kann gleich nach dem gewünschten Plattenmaß erfolgen, um einen möglichst geringen Verschnitt zu haben, wie das der Fall ist, wenn Platten aus fixen Großformaten geschnitten werden.

Erfindungsgemäß umfasst die Leichtbauplatte eine untere Deckplatte, ein Wabenmaterial und eine obere Deckplatte. Bei einer alternativen Ausgestaltung der Leichtbauplatte umfasst die Leichtbauplatte auch mindestens eine Längsrahmenleiste. Ist mindestens eine Längsrahmenleiste vorgesehen, ist die nachfolgend beschriebene Station 3 in dem Produktionsverfahren sinnvoll.

An der nächsten Station 3 werden dann Längsrahmenleisten auf die untere Deckplatte gelegt. In einer bevorzugten Ausführungsform der Erfindung wird ausschließlich eine Längsrahmenleiste in der Mitte der Platte in Produktionsbewegungsrichtung gelegt, so dass die fertige Leichtbauplatte später mit einem Querschnitt in zwei Wabenplatten geteilt werden kann, die jeweils an einer Seite eine Rahmenleiste haben und an den anderen drei Seiten über bekannte Verfahren eine Kantenanleimung oder Kantenanfahren erhalten müssen. Alternativ können aber auch zwei oder drei Längsrahmenleisten auf die untere Deckplatte gelegt werden.

In einem weiteren Schritt wird durch eine oberhalb der Zuführung der unteren Deckplatte angeordnete Station 4 plattenförmiges Wabenmaterial zugeführt, vorzugsweise wird dabei eine Pappwabenextrusion durchgeführt, um eine wabenförmige Platte von oben zuzuführen und benachbart zu der Längsrahmenleiste abzulegen, wobei die Längsrahmenleiste und das Pappwabenmaterial dieselbe Höhe besitzen. Gemäß der Erfindung ist dabei besonders hervorzuheben, dass die Zuführung des Wabenmaterials oberhalb und direkt in Linie mit der Produktionsrichtung der Anlage angeordnet ist. Dadurch wird gewährleistet, dass sämtliche Materialflüsse in ausschließlich einer Richtung laufen und damit die Anlagenleistung deutlich erhöht wird.

Wurde die untere Deckplatte kontinuierlich über eine Rolle zugeführt, kann die Ablängung der unteren Deckplatte in einer geeigneten Länge vor der nächsten Station 5 erfolgen.

An der nächsten Station 5 der Anlage wird das oberhalb der Produktionsrichtung extrudierte Wabenmaterial über eine Rutsche bzw. ein schräg nach unten geführtes Förderband 10 zu einer Leimauftragsmaschine 11 gebracht, an der unten Leim auf das Wabenmaterial aufgetragen wird, vorzugsweise mit einem schnell reagierenden Schmelzkleber. Dieses von unten beleimte Wabenmaterial 12 wird dann automatisch links und rechts der aufgeleimten Längsrahmenleiste auf die untere Deckplatte aufgebracht.

Gemäß einer alternativen Ausführungsform wird das von unten beleimte Wabenmaterial in die zwischenräume zwischen einer rechten, einer mittleren und einer linken Längsrahmenleiste eingebracht.

In der alternativen Ausführungsform der Leichtbauplatte, die keine Längsrahmenleiste umfasst, wird das von unten beleimte Wabenmaterial, vorzugsweise bündig, zwischen den Seitenkanten der unteren Deckplatte auf der unteren Deckplatte aufgebracht.

In dem in Fig. 1 gezeigten Ausführungsbeispiel der Vorrichtung zur Herstellung einer Leichtbauplatte wird die mindestens eine Längsrahmenleiste vor dem Wabenmaterial auf die untere Deckplatte aufgebracht. Das heißt, die Station 3 ist der Station 5 in dem Produktionsverfahren vorgelagert. Es ist jedoch auch möglich, die Station 5 der Station 3 in dem Produktionsverfahren vorzulagern, so dass das Wabenmaterial vor der mindestens einen Längsrahmenleiste auf die untere Deckplatte aufgebracht wird. Weiterhin ist es möglich, die Station 3 und die Station 5 so anzuordnen, dass die mindestens eine Längsrahmenleiste und das Wabenmaterial im Wesentlichen gleichzeitig in dem Produktionsverfahren auf die untere Deckplatte aufgebracht werden.

Nach der Aufbringung des von unten beleimten Wabenmaterials auf die untere Deckplatte wird das bisher bestehende Verbundelement im Durchlauf durch eine Leimauftragsmaschine von oben beleimt. Dabei wird der Leim, bevorzugt Schmelzkleber, auf die oberen Seiten der . Längsrahmenleisten und auf die Oberseite der Wabenelemente an der Station 6 aufgebracht.

Nach dem Beleimen wird von einem oberhalb angeordneten Magazin oder über einen Vakuumtransporteur von der Seite eine Deckplatte, z.B. aus Holzwerkstoff, bevorzugt 2-8 mm starke MDF- oder Spanplatte, an der Station 7 zugeführt.

Alternativ ist es möglich, die obere Deckplatte auf einer Rolle, vorzugsweise einer Vorratsrolle, bereitzustellen. In diesem Fall ist eine entsprechende Rolle in der Station 7 angeordnet. Von dieser Rolle kann die obere Deckplatte dem Produktionsverfahren zugeführt werden. Vorzugsweise wird die obere Deckplatte bei der Zuführung mittels einer zweiten Ablängungsvorrichtung in einer geeigneten Länge abgelängt. Es ist jedoch auch möglich, die obere Deckplatte kontinuierlich zuzuführen. In diesem Fall kann die Leichtbauplatte oder die obere Deckplatte zu einem späteren Zeitpunkt im Produktionsverfahren abgelängt werden.

Danach durchläuft die jetzt vollständige Wabenplatte einen Kalander 8, der vorzugsweise beheizt ist. In diesem Kalander 8 wird die gesamte Wabenplatte auf ein vordefiniertes Maß gebracht und der Leim, vorzugsweise Schmelzkleber, ausgehärtet bzw. ausreagiert.

Vorzugsweise kann, wenn beispielsweise die obere Deckplatte dem Produktionsverfahren kontinuierlich über eine Rolle zugeführt wird, aber auch in jedem anderen Fall, die Ablängung der Leichtbauplatte in einer geeigneten Länge nach Durchlauf des Kalanders 8 erfolgen. Die Ablängung der Platte kann gleich nach dem gewünschten Plattenmaß erfolgen, um einen möglichst geringen Verschnitt zu haben, wie das der Fall ist, wenn Platten aus fixen Großformaten geschnitten werden.

Anschließend wird an der Station 9 das fertige Verbundelement entweder in Linie weiterbearbeitet, z.B. mit einer dekorativen Folie kaschiert oder in Linie abgestapelt. Es können auch noch weitere Bearbeitungsschritte, wie Schneiden, Beschichten, Lackieren etc. erfolgen.

Bei dem obigen Ausführungsbeispiel des Verfahrens wird zuerst die Längsrahmenleiste auf die untere Deckschicht aufgelegt, wobei es natürlich auch möglich ist, zuerst das Wabenmaterial und dann die Längsrahmenleiste aufzulegen. Zudem ist es möglich, zunächst die untere Deckschicht mit Leim zu beschichten und dann ohne weitere Beleimung die mindestens eine Längsrahmenleiste sowie das mindesten ein plattenförmige Wabenmaterial auf die untere Deckschicht aufzulegen und zu fixieren.

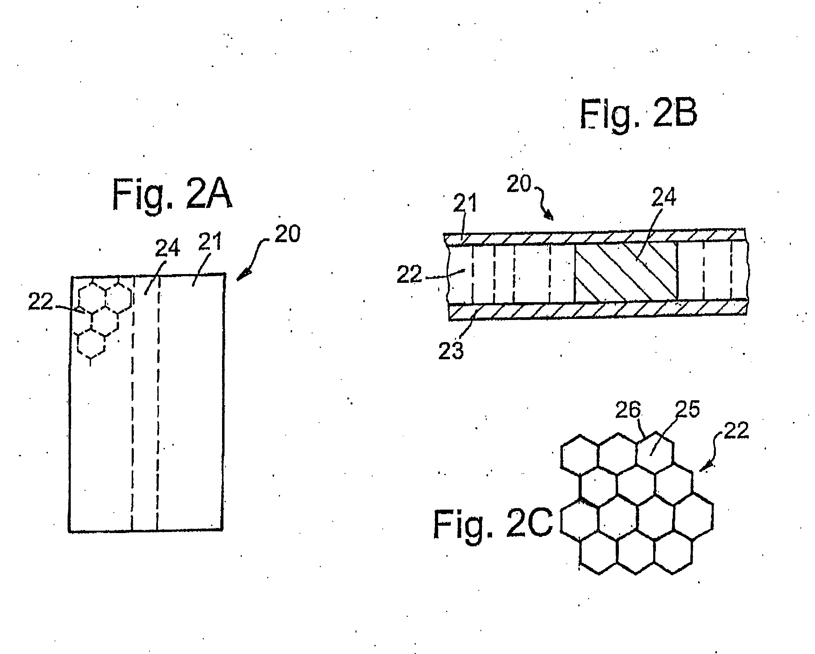

In den Figuren 2A bis 2C ist ein erstes Ausführungsbeispiel einer Leichtbauplatte 20 dargestellt, die in Draufsicht rechteckig ist und deren längere Seiten bei dem Herstellungsverfahren in Produktionsbewegungsrichtung bewegt werden: Diese umfasst eine obere Deckplatte 21, ein Wabenmaterial 22, eine untere Deckplatte 23 sowie eine mittige Längsrahmenleiste 24, die als Kantholz im Querschnitt rechteckig ausgebildet ist.

Das Wabenmaterial 22 umfasst Wände 26, die jeweils einen die Deckplatten 21 und 23 verbindenden Hohlraum 25 umgeben und in dem Ausführungsbeispiel sechseckig ausgebildet sind, wobei auch andere Formen möglich sind. Das Wabenmaterial 22 kann vorzugsweise aus Pappe, Kunststoff oder aus einer Mischung dieser Materialien bestehen.

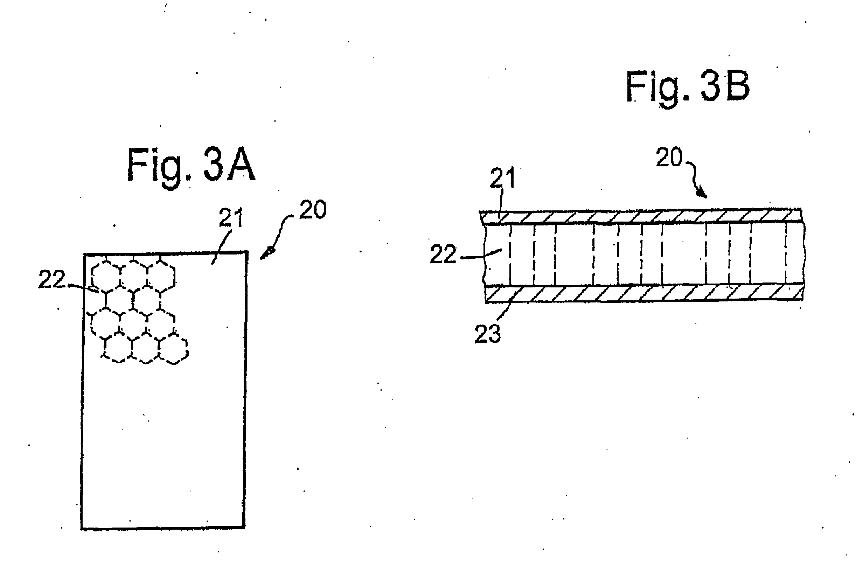

In den Figuren 3A und 3B ist ein weiteres Ausführungsbeispiel der Leichtbauplatte 20 dargestellt, die in Draufsicht rechteckig ist und deren längere Seiten bei dem Herstellungsverfahren in Produktionsbewegungsrichtung bewegt werden: Diese umfasst eine obere Deckplatte 21, ein Wabenmaterial 22 und eine untere Deckplatte 23.

## Patentansprüche

1. Verfahren zur Herstellung einer Leichtbauplatte, insbesondere für Möbel,
- bei dem auf eine untere Deckplatte (23) ein Wabenmaterial (22) aufgelegt wird, wobei das Wabenmaterial (22) ein Pappwabenmaterial ist und durch eine Pappwabenextrusion hergestellt wird,
- bei dem auf das Wabenmaterial (22) eine obere Deckplatte (21) aufgelegt wird und
- bei dem die Herstellung in einem kontinuierlichen Produktionsverfahren mit einer einzigen Produktionsbewegungsrichtung durchgeführt wird,
**dadurch gekennzeichnet,**
**dass** die aufeinandergelegten Elemente einen Kalander (8) durchlaufen, der beheizt ist, mittels dem sie zusammengedrückt und fixiert werden.

2. Verfahren nach Anspruch 1,
**dadurch gekennzeichnet,**
**dass** auf die untere Deckplatte (23) mindestens eine Längsrahmenleiste (24) aufgelegt wird, wobei auf das auf die untere Deckplatte (23) aufgelegte Wabenmaterial (22) und die mindestens eine Längsrahmenleiste (24) die obere Deckplatte (21) aufgelegt wird.

3. Verfahren nach Anspruch 2,
**dadurch gekennzeichnet,**
**dass** die mindestens eine Längsrahmenleiste (24) im Produktionsverfahren im Wesentlichen gleichzeitig mit dem Wabenmaterial (22) oder vor dem Wabenmaterial (22) oder nach dem Wabenmaterial (22) auf die untere Deckplatte (23) aufgelegt wird.

4. Verfahren nach Anspruch 2 oder 3,
**dadurch gekennzeichnet,**
**dass** die mindestens eine Längsrahmenleiste (24) mit ihrer Längserstreckung parallel zu der Produktionsbewegungsrichtung auf die untere Deckplatte (23) aufgelegt wird.

5. Verfahren nach einem der Ansprüche 1 bis 4,
**dadurch gekennzeichnet,**
**dass** die untere Deckplatte (23), das Wabenmaterial (22), die mindestens eine Längsrahmenleiste (24) und/oder die obere Deckplatte (21) miteinander verklebt werden.

6. Verfahren nach einem der Ansprüche 2 bis 5,
**dadurch gekennzeichnet,**
**dass** die mindestens eine Längsrahmenleiste (24) in der Mitte der unteren Deckplatte (23) abgelegt wird.

7. Verfahren nach Anspruch 5 oder 6,
**dadurch gekennzeichnet,**
**dass** zum Verkleben ein schnell reagierender Hotmelt-Klebstoff, vorzugsweise EVA, PUR, PO, APAO und/oder PA verwendet wird.

8. Verfahren nach einem der Ansprüche 1 bis 7,
**dadurch gekennzeichnet,**
**dass** die Leichtbauplatten mit einer Produktionsleistung von mehr als 6 Platten pro Minute bei Wabenplattenabmessungen von 3000 x 1000 mm hergestellt werden.

## Claims

1. Method for producing a lightweight board, in particular for furniture,
- in which a honeycomb material (22) is placed onto a lower cover plate (23), wherein the honeycomb material (22) is a board honeycomb material and is produced by a board honeycomb extrusion,
- in which an upper cover plate (21) is placed onto the honeycomb material (22) and
- in which manufacturing is carried out in a continuous production process with a single direction of production movement,
**characterised in**
**that** the elements placed one upon the other run through a calender (8) which is heated, by means of which they are compressed and fixed.

2. The method according to claim 1,
**characterised in**
**that** at least one longitudinal frame strip (24) is placed onto the lower cover plate (23), wherein the upper cover plate (21) is placed onto the honeycomb material (22) placed on the lower cover plate (23) and the at least one longitudinal frame strip (24).

3. The method according to claim 2,
**characterised in**
**that** in the production process the at least one longitudinal frame strip (24) is placed substantially simultaneously with the honeycomb material (22) or before the honeycomb material (22) or after the honeycomb material (22) on the lower cover plate (23).

4. The method according to claim 2 or 3,
**characterised in**
**that** the at least one longitudinal frame strip (24) is placed onto the lower cover plate (23) with its longitudinal extension parallel to the direction of production movement.

5. The method according to any one of claims 1 to 4,
**characterised in**
**that** the lower cover plate (23), the honeycomb material (22), the at least one longitudinal frame strip (24) and/or the upper cover plate (21) are glued together.

6. The method according to any one of claims 2 to 5,
**characterised in**
**that** the at least one longitudinal frame strip (24) is placed in the centre of the lower cover plate (23).

7. The method according to claim 5 or 6,
**characterised in**
**that** a fast-reacting hotmelt adhesive, preferably EVA, PUR, PO, APAO and/or PA is used for adhesion.

8. The method according to any one of claims 1 to 7,
**characterised in**
**that** the lightweight boards are manufactured at a production rate of more than 6 boards per minute with honeycomb board dimensions of 3000 x 1000 mm.

## Revendications

1. Procédé de fabrication d'un panneau alvéolaire, notamment pour des meubles,
- lors duquel, sur un panneau de couverture (23) inférieure, on pose un matériau alvéolé (22), le matériau alvéolé (22) étant un matériau alvéolé en carton et étant fabriqué par extrusion alvéolaire de carton,
- lors duquel on pose sur le matériau alvéolé (22) un panneau de couverture (21) supérieure,
- lors duquel on procède à la fabrication par procédé de production continu, avec une seule direction de déplacement en production,
**caractérisé en ce que** les éléments superposés traversent une calandre (8) qui est chauffée, à l'aide de laquelle on les comprime et on les fixe.

2. Procédé selon la revendication 1, **caractérisé en ce que** sur le panneau de couverture (23) inférieure, on pose au moins une baguette longitudinale de cadre (24), le panneau de couverture (21) supérieure étant posée sur le matériau alvéolé (22) posé sur le panneau de couverture (23) inférieure (22) et l'au moins une baguette longitudinale de cadre (24).

3. Procédé selon la revendication 2, **caractérisé en ce que** lors du procédé de production, on pose l'au moins une baguette longitudinale de cadre (24) sur le panneau de couverture (23) inférieure sensiblement en même temps que le matériau alvéolé (22) ou avant le matériau alvéolé (22) ou après le matériau alvéolé (22).

4. Procédé selon la revendication 2 ou la revendication 3, **caractérisé en ce qu'**on pose l'au moins une baguette longitudinale de cadre (24) par son extension longitudinale à la parallèle de la direction de déplacement en production sur le panneau de couverture (23) inférieure.

5. Procédé selon l'une quelconque des revendications 1 à 4, **caractérisé en ce qu'**on colle ensemble le panneau de couverture (23) inférieure, le matériau alvéolé (22), l'au moins une baguette longitudinale de cadre (24) et/ou le panneau de couverture (21) supérieure.

6. Procédé selon l'une quelconque des revendications 2 à 5, **caractérisé en ce qu'**on pose l'au moins une baguette longitudinale de cadre (24) au centre du panneau de couverture (23) inférieure.

7. Procédé selon la revendication 5 ou 6, **caractérisé en ce qu'**on utilise pour le collage une colle thermofusible à réaction rapide, de préférence de l'EVA, du PUR, du PO, de l'APAO et/ou du PA.

8. Procédé selon l'une quelconque des revendications 1 à 7, **caractérisé en ce qu'**on fabrique les panneaux alvéolaires à une cadence de production supérieure à 6 panneaux par minute en cas des dimensions de panneaux en matériau alvéolé de 3000 x 1000 mm.
